# EUROPÄISCHE PATENTANMELDUNG

(11) **EP 0 829 912 A2**
(43) Veröffentlichungstag der Anmeldung: **18.03.1998**
(21) Anmeldenummer: 97250269.4
(22) Anmeldetag: 12.09.1997
(51) Int. Cl.: H01M 8/10, H01M 8/06, H01M 8/02, G09B 23/24

(54) **Demonstrationsanlage zur Wasserstoff-Energieerzeugung**

(30) Priorität: 15.09.1996 DE 19639068
(71) Anmelder: Bronold, Matthias, Dr., 12207 Berlin (DE); Colell, Henrik, Dr., 12207 Berlin (DE)
(72) Erfinder: Bronold, Matthias, Dr., 12207 Berlin (DE); Colell, Henrik, Dr., 12207 Berlin (DE)
(74) Vertreter: Specht, Volker

(57) **Zusammenfassung**

Ein Modell zur Veranschaulichung der Wasserstofftechnologie umfaßt einen an eine Energiequelle angeschlossenen Elektrolyseur (21) sowie Speicher (22) und eine Brennstoffzelle (23). Die fluidführenden Leitungen und Gehäuse bestehen aus transparentem Material. An eine Membran-Elektroden-Einheit (11) der Brennstoffzelle werden über transparente Gasführungselemente (13), die über ein transparentes elastisches Material (14) an der Gehäusewand (16) der Brennstoffzelle elastisch abgestützt sind, Kollektor-Lochbleche (12) mit der Dickenänderung der Membran-Elektroden-Einheit folgender gleichbleibender Kraft vollflächig angedrückt. Der Vorratstank des Elektrolyseurs ist als geschlossener Behälter mit über seine Oberkante ragendem und in die Vorratsflüssigkeit eintauchendem Steigrohr ausgebildet, um durch die so bestimmten Druckverhältnisse ein selbsttätiges Nachfüllen der Elektrolysekammern und andererseits das Durchdrücken der Gase durch die Waschflüssigkeit des Gaswäschers zu gewährleisten. Die Anlage demonstriert anschaulich die Vorgänge bei der Wasserstoff-Technologie, ist einfach und kostengünstig aufgebaut und verfügt über eine lange Lebensdauer.

## Beschreibung

Die Erfindung betrifft eine Demonstrationsanlage zur Wasserstoff-Energieerzeugung gemäß dem Oberbegriff des Patentanspruchs 1.

Die Wasserstofftechnologie zur Speicherung von Strom, der vorzugsweise aus erneuerbaren Energiequellen wie Sonne oder Wind erzeugt wird, gewinnt zunehmend an Bedeutung und erfordert eine zielgerichtete Ausbildung an Schulen und Universitäten sowie von Fachpersonal unter Verwendung von Demonstrations-anlagen, die dieses zukunftsträchtige Energieerzeugungs- und -speicherverfahren anschaulich wiedergeben.

Die bekannten Wasserstoff-Anlagen sind jedoch insofern nachteilig, als zum einen bei den zur Spaltung von Wasser in Wasserstoff und Sauerstoff verwendeten Elektrolyseuren zur Bereitstellung des notwendigen hydrostatischen Druckes für die Gasdurchströmung des Gaswäschers sowie die Nachlieferung von Wasser aus dem Vorratstank in die Elektrolysekammer ein erheblicher apparativer und steuerungstechnischer Aufwand erforderlich ist, unter dem einerseits die Anschaulichkeit des Modells leidet und der andererseits die Störanfälligkeit der Anlage erhöht und zu unvertretbar hohen Kosten führt.

Zum anderen bereitet der Betrieb einer bekannten, zu Demonstrationszwecken errichteten Wasserstoff-Anlage mit Bezug auf die Energierückgewinnung aus dem gespeicherten Wasserstoff insofern Schwierigkeiten, als zwar der Blick auf die an der Membran-Elektroden-Einheit der Brennstoffzelle angedrückten, als Lochbleche ausgeführten Stromkollektoren und die dort stattfindende Wasserbildung gewährleistet ist, jedoch nicht das für die Funktion der Brennstoffzelle notwendige gleichmäßige Andrücken der Stromkollektoren an die sich unter dem Einfluß von Wasser in der Dicke verändernde Membran-Elektroden-Einheit, die sich dadurch verzieht und durchbiegt und somit nur eine geringe Lebensdauer aufweist.

Der Erfindung liegt daher die Aufgabe zugrunde, eine Wasserstoff-Experimentieranlage bereitzustellen, die mit geringem Aufwand hergestellt werden kann und über eine lange Betriebsdauer verfügt und zudem die Wasserstofftechnologie für Ausbildungszwecke anschaulich erkennbar macht.

Erfindungsgemäß wird die Aufgabe bei einer Demonstrationsanlage zur Wasserstoff-Energieerzeugung gemäß dem Oberbegriff des Patentanspruchs 1 in der Weise gelöst, daß an die Kollektor-Lochbleche der Brennstoffzelle jeweils ein transparentes Gasführungselement mit zu der Membran-Elektroden-Einheit hin offenen Kanälen für die Fluidführung über in den Raum zwischen der jeweiligen Wand des transparent ausgeführten Gehäuses und dem Gasführungselement unter Vorspannung eingebrachtes transparentes, elastisches Material mit gleichbleibendem Druck gehalten ist.

In fertigungstechnisch vorteilhafter Ausgestaltung der Erfindung ist das Gasführungselement auf der Seite der Luftzufuhr oder der Sauerstoffzufuhr zur Brennstoffzelle einstückig mit deren Gehäuse ausgebildet. Das elastische Andrücken der Gasführungselemente an die Membran-Elektroden-Einheit erfolgt dabei allein durch das elastische Material auf der Wasserstoffseite.

Aufgrund dieser Brennzellengestaltung wird zum einen der Blick in das Innere der Brennstoffszelle und auf den Prozeß der Wasserbildung an den Elektroden sichtbar gemacht und andererseits ist bei kostengünstiger Fertigung eine effektive Stromabnahme sowie eine lange Betriebsdauer der Brennstoffzelle der Wasserstoff-Anlage gewährleistet.

Nach einem weiteren Merkmal der Erfindung ist die aus einem Wasserstoffspeicher und einer Brennstoffzelle nach Anspruch 1 gebildete Wasserstoff-Anlage zur unmittelbaren Bereitstellung des Wasserstoffs mit einem an eine Energiequelle angeschlossenen Elektrolyseur und einem diesem zugeordneten, nach außen geschlossenen Vorratstank versehen, in dessen Flüssigkeitsvorrat ein Steigrohr taucht, das über die Oberkante des Vorratstanks hinausragt und mit der Umgebung über Öffnungen in Verbindung steht.

Durch diese Ausbildung des Vorratstanks ist zum einen der erforderliche hydrostatische Druck in der Elektrolysekammer zum Austragen der gebildeten Gase über den Gaswäscher und zum anderen das selbsttätige Nachfüllen von Wasser in die Elektrolysekammer gewährleistet. Die Anlage in ihrer komplexen Form ist dadurch insgesamt einfacher, kostengünstiger und übersichtlicher aufgebaut und zudem weniger störanfällig. Alle Hohlkörper des Elektrolyseurs bestehen ebenfalls aus transparentem Material, so daß die Wasserstofftechnologie auch an diesem Bauteil zur Erzeugung und nachfolgenden Speicherung des Wasserstoffs anschaulich demonstriert werden kann.

Nach einem weiteren Merkmal der Erfindung sind die Speicher für den erzeugten Wasserstoff - und gegebenenfalls den Sauerstoff - aus Sicherheitsgründen und zur weiteren Vereinfachung der Demonstrationsanlage als Hohlkörper ausgeführt, durch den die Wasserstoff- bzw. Sauerstoffleitungen hindurchgeführt sind.

Weitere zweckmäßige Ausgestaltungen und Vorteile der Erfindung ergeben sich aus der nachfolgenden Beschreibung eines Ausführungsbeispiels sowie den Unteransprüchen.

Ein Ausführungsbeispiel der Erfindung wird anhand der Zeichnung näher erläutert. Es zeigen:
- Fig. 1: eine schematische Darstellung einer herkömmlichen Wasserstoff-Anlage, die auf der Basis von Solar-Energie betrieben wird
- Fig. 2: eine Seitenansicht des Elektrolyseurs einer erfindungsgemäß ausgebildeten Wasserstoff-Anlage; und
- Fig. 3: eine Schnittansicht der Brennstoffzelle einer erfindungsgemäß ausgebildeten Demonstrationsanlage.

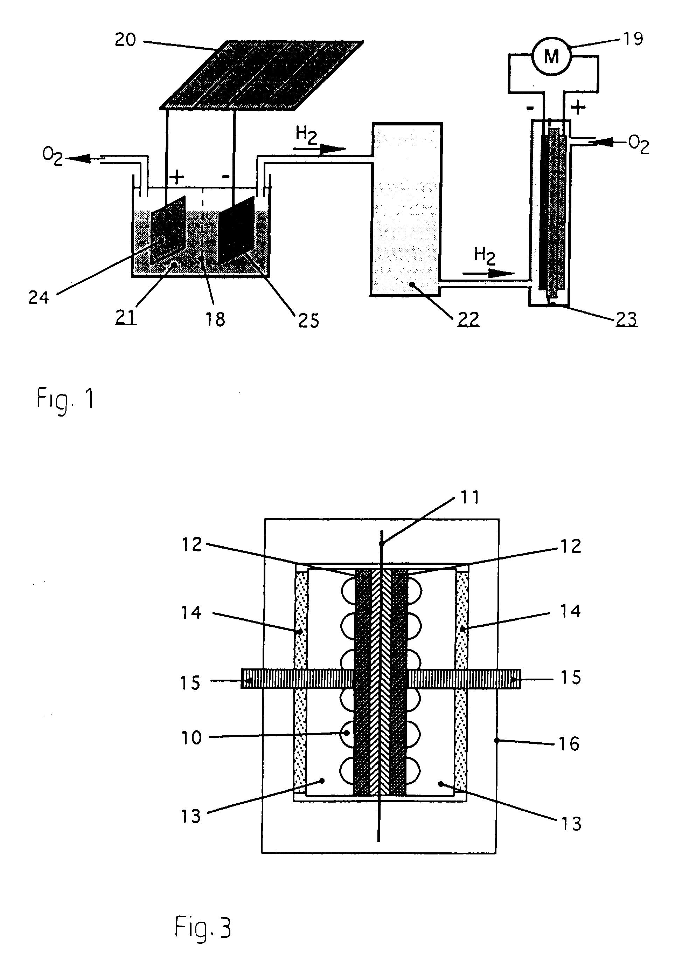

Eine Solar-Wasserstoff-Anlage zur Stromerzeugung aus Sonnenlicht mit Energie-Zwischenspeicherung besteht gemäß Fig. 1 bekanntermaßen aus einem die auftreffende Lichtenergie in elektrischen Gleichstrom umwandelnden Solarmodul 20, einem ein elektrochemisches Element bildenden Elektrolyseur 21 zur Umwandlung des Solarstroms in chemische Energie, einem Speicher 22 zur Aufnahme des bei der Elektrolyse erzeugten Wasserstoffs und einer Brennstoffzelle 23 zur Stromerzeugung aus dem gespeicherten Wasserstoff in einem elektrochemischen Prozeß. Der in dem Solarmodul 20 erzeugte Gleichstrom wird jeweils der in einer mit Elektrolytlösung gefüllten Elektrolysekammer 1 angeordneten Anode 24 und Kathode 25 des Elektrolyseurs 21 zugeführt. Ein Diaphragma 18 trennt die Elektroden und teilt die Elektrolysekammer 1 in zwei Kammern zur separaten Abführung des Wasserstoffs und des Sauerstoffs. Die Brennstoffzelle besteht aus einer mit Wasserstoff und Sauerstoff (Luft) beaufschlagten, in einem Gehäuse 16 angeordneten Membran-Elektroden-Einheit 11. Die an der positiven Elektrode 11a gebildeten Wasserstoffionen diffundieren durch die Membran (Elektrolyt) 11b zur negativen Elektrode 11c und reagieren mit dem an dieser reduzierten Sauerstoff zu Wasser, so daß über einen mit der negativen und der positiven Elektrode 11a, 11c verbundenen Verbraucher 19 ein Strom fließt.

Gemäß der in Fig. 3 wiedergegebenen detaillierten Darstellung einer erfindungsgemäß ausgebildeten Brennstoffzelle befindet sich an beiden Seiten der Membran-Elektroden-Einheit 11 jeweils ein Kollektor-Lochblech 12 zur Stromabnahme über Kontakte 15. Zwischen dem Kollektor-Lochblech 12 und der benachbarten Wand des aus transparentem Material gefertigten Gehäuses 16 sind jeweils ein transparentes Gasführungselement 13 mit zum Kollektor-Lochblech 12 hin offenen Kanälen 10 zur Zuführung der Gase und zur Abführung des gebildeten Wassers sowie ein als Platte, Matte oder dgl. ausgebildetes transparentes, elastisches Material 14 angeordnet. Durch das unter Vorspannung in den Raum zwischen dem Gasführungselement und der Gehäusewand eingebrachte elastische Material 14 folgen die Gasführungselemente der durch die Wasseraufnahme bedingten Dickenänderung der Membran-Elektroden-Einheit 11, so daß jederzeit ein vollflächiges Andrücken des Kollektor-Lochblechs 12 an die Membran-Elektroden-Einheit und damit die Funktionsfähigkeit und eine lange Betriebsdauer der Brennstoffzelle gewährleistet ist. Aufgrund der Ausführung des Gehäuses 16, der Gasführungselemente 13 und des elastischen Materials 14 aus transparentem Werkstoff kann die am Kollektor-Lochblech 12 durch die Löcher sichtbare Wasserbildung beobachtet werden.

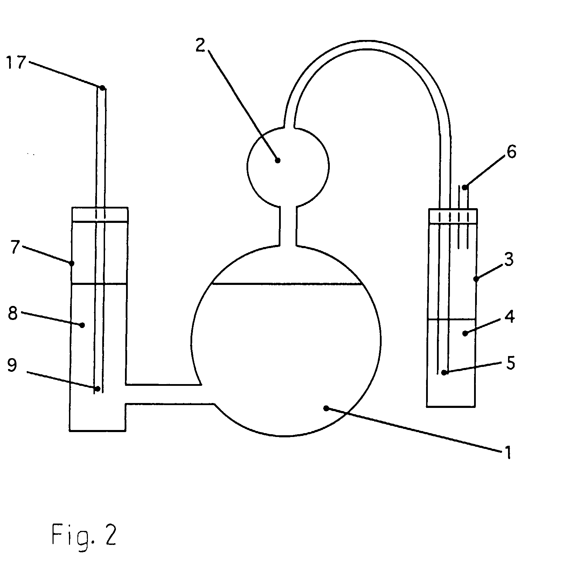

Der in Fig. 2 gezeigte Elektrolyseur 21 ist in einer Seitenansicht nach Fig. 1 des wasserstoffbildenden Teils der erfindungsgemäß ausgeführten Elektrolysekammer 1, jedoch ohne Darstellung der Kathode 25, wiedergegeben. Der Gasauslaß der Elektrolysekammer 1 ist über einen Gasscheider 2, in dem der gebildete Wasserstoff von mitgerissener Elektrolytlösung getrennt wird, und ein an diesen angeschlossenes Rohr 5 mit einem Gaswäscher 3 verbunden, der eine Waschflüssigkeit 4 aus verdünnter, nicht flüchtiger und mit einem Indikator versetzter Säure enthält. Im oberen Bereich des Gaswäschers 3 ist ein Gasauslaß 6 vorgesehen. Die Elektrolysekammer 1 ist in ihrem unteren Teil mit einem geschlossenen Vorratsbehälter 7 verbunden, in dessen Flüssigkeitsvorrat 8 ein Steigrohr 9 eintaucht. In dem über die Oberkante des Vorratstanks 7 hinausragenden Teil des Steigrohres 9 sind Öffnungen 17 vorgesehen. Die Kombination des so ausgebildeten Vorratstanks 7 und des Gaswäschers 3 mit der Elektrolysekammer 1 gewährleistet eine selbständige Nachlieferung von Elektrolytlösung in die Elektrolysekammer.

Während des Betriebes der Anlage ist ein gewisser hydrostatischer Druck erforderlich, um die Flüssigkeitssäule im Rohr 5 des Gaswäschers 3 nach unten zu drücken, so daß das Gas über den Auslaß 6 letztlich in den Speicher 22 gelangen kann. Der notwendige Druck wird dadurch erzeugt, daß durch die gebildeten Gase ein Teil des Flüssigkeitsvorrats 8 durch das Steigrohr 9 nach oben gedrückt wird und so ein hydrostatischer Druck entsteht.

Die Nachlieferung der Elektrolytlösung in die Elektrolysekammer 1 erfolgt während des Stillstands des Elektrolyseurs 21 und beruht darauf, daß sich in dieser Zeit das Restgasvolumen in der Elektrolysekammer 1 überraschenderweise verringert und durch den entstehenden Unterdruck Waschflüssigkeit 4 in dem Rohr 5 nach oben gezogen wird. Der so aufgebaute hydrostatische Unterdruck wird im Vorratstank 7 durch ein Absenken des Füssigkeitspegels im Steigrohr 9 kompensiert. Dadurch wird Umgebungsluft angesaugt und gelangt in den oberen Bereich des Vorratstanks 7, um einen Teil des Flüssigkeitsvorrat 8 in die Elektrolysekammer 1 zu drücken.

### Bezugszeichenliste:

- 1: Elektrolysekammer
- 2: Gasscheider
- 3: Gaswäscher
- 4: Waschflüssigkeit
- 5: Rohr
- 6: Gasauslaß
- 7: Vorratsbehälter
- 8: Flüssigkeitsvorrat
- 9: Steigrohr
- 10: Kanäle in 13
- 11: Membran-Elektroden-Einheit
- 11a: positive Elektrode
- 11b: Membran (Elektrolyt)
- 11c: negative Elektrode
- 12: Kollektor-Lochblech
- 13: Gasführungselement
- 14: elastisches Material
- 15: Kontakte
- 16: Gehäuse von 23
- 17: Öffnungen von 9
- 18: Diaphragma
- 19: Verbraucher
- 20: Solarmodul
- 21: Elektrolyseur
- 22: Speicher
- 23: Brennstoffzelle
- 24: Anode von 21
- 25: Kathode von 21

## Patentansprüche

1. Demonstrationsanlage zur Wasserstoff-Energieerzeugung, mit einem Speicher (22) für Wasserstoff und einer Brennstoffzelle (23), die aus einem Gehäuse (16) und einer dieses teilenden Membran-Elektroden-Einheit (11) mit beidseitig zugeordnetem Kollektor-Lochblech (12) und von diesem nach außen zu einem Verbraucher (19) führenden Kontakten (15) gebildet ist, dadurch gekennzeichnet, daß an den Kollektor-Lochblechen (12) der Brennstoffzelle (23) jeweils ein transparentes Gasführungselement (13) mit zu der Membran-Elektroden-Einheit (11) hin offenen Kanälen (10) für die Fluidführung über in den Raum zwischen der jeweiligen Wand des Gehäuses (16) und dem Gasführungselement (13) unter Vorspannung eingebrachtes transparentes, elastisches Material (14) mit gleichbleibendem Druck gehalten ist.

2. Anlage nach Anspruch 1, dadurch gekennzeichnet, daß das elastische Material (14) aus Silikon besteht.

3. Anlage nach Anspruch 1, dadurch gekennzeichnet, daß die Gasführungselemente (13) und das Gehäuse (16) aus Kunststoff bestehen.

4. Anlage nach Anspruch 3, dadurch gekennzeichnet, daß der Kunststoff Acrylglas ist.

5. Anlage nach einem der Ansprüche 1 bis 4, dadurch gekennzeichnet, daß das Gasführungselement (13) auf der Seite der Luft-/Sauerstoff-Zufuhr zur Membran-Elektroden-Einheit (11) einstückig mit dem Gehäuse (16) ausgebildet ist.

6. Anlage nach Anspruch 1, dadurch gekennzeichnet, daß dem der Brennstoffzelle (23) zugeordneten Speicher (22) eine durch ein Diaphragma (18) in zwei Elektrolysekammern (1), die jeweils eine Anode (24) und eine Kathode (25) aufnehmen und denen jeweils ein Gasscheider (2) nachgeschaltet ist, geteilter, an eine Energiequelle (20) angeschlossener Elektrolyseur (21) vorgeschaltet ist, der eingangsseitig an einen Vorratstank (7) und ausgangsseitig an einen Gaswäscher (3) angeschlossen ist.

7. Anlage nach Anspruch 6, dadurch gekennzeichnet, daß der Vorratstank (7) zur selbsttätigen Nachlieferung von Wasser in die Elektrolysekammer (1) in der Ruhephase des Elektrolyseurs (23) sowie zur Gewährleistung des für das Austragen der Gase aus dem Gaswäscher (3) erforderlichen hydrostatischen Drucks zur Umgebung hin verschlossen ist, wobei ein in den Flüssigkeitsvorrat (8) tauchendes Steigrohr (9) an seinem anderen, über den Vorratstank (7) hinausragenden Ende mit der Umgebung über Öffnungen (17) in Verbindung steht.

8. Anlage nach Anspruch 6 und 7, dadurch gekennzeichnet, daß der Gaswäscher (3) eine Waschflüssigkeit enthält, die aus einer verdünnten, nicht flüchtigen Säure besteht.

9. Anlage nach Anspruch 8, dadurch gekennzeichnet, daß die Waschflüssigkeit mit einem Indikator versetzt ist, um bei einem Farbwechsel die Erschöpfung der Säure anzuzeigen.

10. Anlage nach einem der Ansprüche 1 bis 9, dadurch gekennzeichnet, daß neben Bauteilen der Brennstoffzelle (23) auch die weiteren Hohlkörper und medienführenden Leitungen aus transparentem Material bestehen.

11. Anlage nach Anspruch 6, dadurch gekennzeichnet, daß der Speicher (22) für Wasserstoff und gegebenenfalls ein dem Elektrolyseur nachgeschalteter Speicher für Sauerstoff als Imitation mit einer durch einen Behälter hindurchgeführten medienführenden Leitung ausgebildet sind.

12. Anlage nach Anspruch 1, dadurch gekennzeichnet, daß die Brennstoffzelle (23) mit dem Speicher (22) für Wasserstoff eine von den Anlageteilen zur Wasserstoffherstellung unabhängig betreibbare Einheit bildet.
